# EUROPEAN PATENT APPLICATION

(11) **EP 4 129 439 A1**
(43) Date of publication of application: **08.02.2023**
(21) Application number: 22187334.2
(22) Date of filing: 27.07.2022
(51) Int. Cl.: B01D 29/01, B01D 29/075, B01D 29/64, B01D 29/66, B01D 35/02

(54) **A FILTERING DEVICE AND A DISTRIBUTION LINE FOR DISTRIBUTING A FLUID HAVING SOLID PARTICLES IN SUSPENSION**

(30) Priority: 06.08.2021 IT 202100021410
(71) Applicant: Guerra, Renato, 80055 PORTICI (NAPOLI) (IT)
(72) Inventor: Guerra, Renato, 80055 PORTICI (NAPOLI) (IT)
(74) Representative: Dondi, Silvia

(57) **Abstract**

Filtering device (1) for filtering a fluid having solid particles in suspension, comprising:
a body (2) defining a filtering chamber (3) and having an inlet (2a) for the fluid to be filtered, an outlet (2b) for the filtered fluid and a drain (2c) for the solid particles removed from the fluid;
a wall (4) on which a plurality of openings (5) are obtained, said wall (4) being arranged inside the filtering chamber (3) and transversely to the fluid flow passing from the inlet (2a) to the outlet (2b) so that, when the fluid passes through the openings (5) of the wall (4), the solid particles larger than the openings (5) are retained on the wall (4);
a removal means (6) for removing the solid particles, operatively active on the wall (4) to remove the retained solid particles and convey them towards the drain (2c).

## Description

The present invention relates to a filtering device for filtering a fluid having solid particles in suspension and a distribution line for distributing such a fluid.

The present invention can be interchangeably employed for any fluid having suspended solid impurities to be filtered.

As is known, a filter is used to separate a dispersed phase, consisting of solid particles, from a fluid which constitutes a continuous phase. The key component of a filter is the filtering septum which carries out the above task. Usually, the filtering septum can be a grille (and in this case mention is made of a screening) or a filtering medium (canvas, cardboard, membrane, etc.). The screening allows to separate particles with a diameter greater than that of the holes of the grille, while the filtering medium is capable of filtering particles with a very small diameter and also of separating an aliquot of particles with a diameter less than the diameter of the interstices.

In common mechanical or gravity filtration, the filtering bed is static and the suspension crosses it from the top downwards. Generally, a small amount of chlorine (1-2 ppm) is added to the fluid solution to be filtered, with the double purpose of preventing the formation of biological deposits on the filtering layer, and of improving the biological features of the filtered water: hence also the need for a subsequent dechlorination on activated carbon, which thus serves to eliminate the chlorine which has had a bactericidal action against all the pathogenic organisms, as well as discolouration and deodorisation.

In pressure filtration, the motion of the fluid solution is favoured by the action of an electric pump, or more rarely by compressed air or nitrogen. The pressure filters are cylindrical, vertical or horizontal, depending on the arrangement of the cylinder axis; the filtering means consists of inert materials such as quartz sand or granulated anthracite, diatomaceous earth, cartons, ceramic or sintered steel cartridges or in textile or plastic material.

When a foreign body enters the production cycle, it is collected by the filters. When these reach a certain degree of clogging, they must be put out of operation to be cleaned, or, if they undergo a certain level of degradation, they may also have to be replaced. All this translates into an interruption of the production step, leading to obvious losses from an economic point of view.

Within a highly automated industrial process, the problem of clogged filtration systems is curbed by introducing the concept of a self-cleaning filter. This type of filter, beyond the various techniques with which it obtains the result, is capable of allowing the cleaning of the filtering medium without the need to stop the line and possibly disassemble the filter.

The filtration operation carried out with filtering means is divided into a series of steps:
- actual filtration;
- washing the filtering medium and the container;
- counter-washing the filtering medium and the container;
- draining, which always follows the washing and counter-washing operations;
- by-pass, which is implemented in the event of filter maintenance: in this case, if the process allows it, for a short period the production cycle will be fed with unfiltered water, or the filtration system will consist of two filters in parallel, to always have one in operation.

As a whole, these steps ensure the perfect efficiency of the filtering medium, the most important component of the filter, the accumulation of suspended substances on the surface of the filter, or cracks on the filtering mass cause preferential liquid conduits to be created, reducing the efficiency of the process. Of all the steps mentioned, the most important is the counter-washing or counter-current washing step, which has the double purpose of freeing the filter from the suspended substances which have clogged it, and of reclassifying the filtering mass: this operation requires a water flow rate varying from 1 to 5% of the total filtered water. Therefore, cleaning the filter requires a considerable waste of water.

A known type of self-cleaning filter is the wedge-wire cartridge filter. The filtering elements are characterised by being made with a metal wire with a spirally wound trapezoidal section, where the distance between two profiles defines the degree of filtration.

This type of self-cleaning filter, like many other existing ones, is constructively complex and bulky.

In this context, the technical task at the basis of the present invention is to propose a filtering device for filtering a fluid having solid particles in suspension and a distribution line for distributing such a fluid, which overcome the problems of the prior art cited above.

In particular, the object of the present invention is to propose a filtering device for filtering a fluid having solid particles in suspension, which constitutes an alternative to the known self-cleaning filters.

Another object of the present invention is to provide a filtering device for filtering a fluid having solid particles in suspension, which is constructively simpler with respect to the known solutions.

A further object of the present invention is to propose a filtering device for filtering a fluid having solid particles in suspension, which reduces the consumption of water used for cleaning.

The stated technical task and specified aims are substantially achieved by a filtering device for filtering a fluid having solid particles in suspension, comprising:
- a body defining a filtering chamber and having an inlet for the fluid to be filtered, an outlet for the filtered fluid and a drain for the solid particles removed from the fluid;
- a wall on which a plurality of openings are obtained, arranged inside the filtering chamber and transversely to the fluid flow passing from the inlet to the outlet so that, when the fluid passes through the openings of the wall, the solid particles larger than the openings are retained on the wall;
- a removal means for removing the solid particles, operatively active on the wall to remove the retained solid particles and convey them towards the drain.

In accordance with an embodiment, the wall is made in a single piece with the body so as to be an integral part thereof.

In accordance with an embodiment, the wall is curved and is arranged near the outlet so as to delimit the filtering chamber.

In accordance with an embodiment, the removal means comprises a scraper element and movement means operatively active on the scraper element to move it along the wall between a first position, in which it is located at a first distance from the drain, and a second position, in which it is located at a second distance from the drain which is lower than the first, and vice versa.

In accordance with an embodiment, the movement means comprises a support which is movable between the first and the second position. The scraper element is a cutting portion arranged perimetrally around at least one portion of the support.

In accordance with an embodiment, the movement means is operatively active on the scraper element to move it between the two positions along a substantially straight trajectory.

In accordance with an embodiment, the movement means is operatively active on the scraper element to move it between the two positions according to a roto-translational motion.

In accordance with an embodiment, the removal means comprises a scraper element and movement means operatively active on the scraper element to rotate it with respect to the wall.

Preferably, the removal means comprises a dispensing nozzle for dispensing compressed air through the wall towards the inlet.

The stated technical task and specified aims are substantially achieved by a distribution line for distributing a fluid having solid particles in suspension, comprising:
- a filtering device according to what is described;
- a first shut-off valve arranged upstream of the inlet of the filtering device;
- a second shut-off valve arranged downstream of the drain of the filtering device.

The distribution line is configurable in a first condition, in which the first shut-off valve is open, the second shut-off valve is closed and the fluid flow is filtered by passing through the filtering device. The distribution line is configurable in a second condition, in which the first shut-off valve is closed, interrupting the fluid flow through the filtering device, the second shut-off valve is open and the removal means acts on the wall to remove the solid particles retained thereby and convey them to the drain.

Further features and advantages of the present invention will become more apparent from the illustrative and thus non-limiting description of a preferred but not exclusive embodiment of a filtering device for filtering a fluid having solid particles in suspension and a distribution line for distributing such a fluid, as illustrated in the appended drawings, in which:
- figures 1A and 1B illustrate a filtering device for filtering a fluid having solid particles in suspension, according to the present invention, with scraper element respectively in a first and a second position, in a front schematic view;
- figure 2 illustrates a detail (scraper element mounted on a support) of the filtering device of figure 1A;
- figures 3A and 3B respectively illustrate a perspective view and a sectional view of the body of the filtering device, with the scraper element in the first position;
- figure 4 illustrates a perspective view of the body of the filtering device (in which a portion has been hidden to show the interior), with the scraper element in an intermediate position between the first and the second position;
- figures 5A and 5B respectively illustrate a perspective view (in which a portion has been hidden to show the interior) and a sectional view of the body of the filtering device, with the scraper element in the second position;
- figure 6 illustrates another embodiment of the filtering device, according to the present invention, in a perspective view;

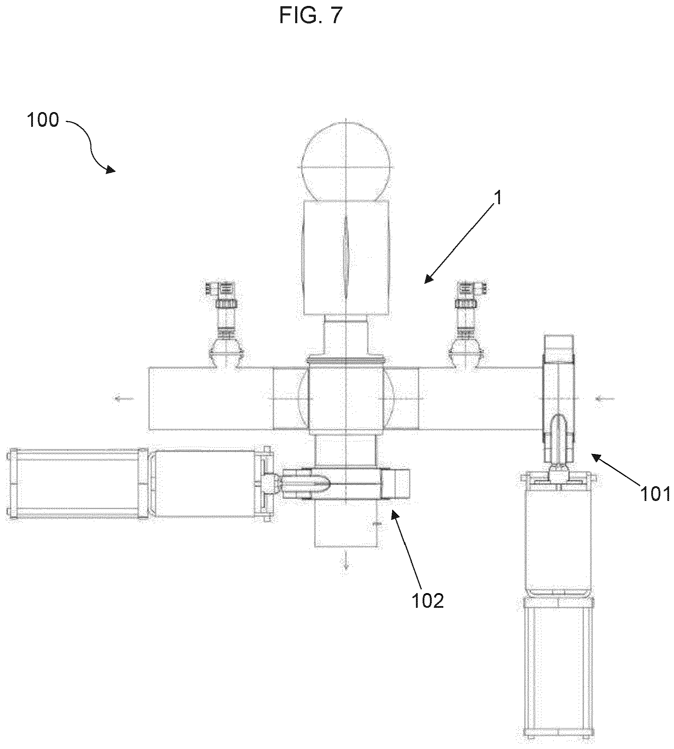

- figure 7 illustrates a distribution line of a fluid having solid particles in suspension, according to the present invention.

With reference to the figures, number 1 indicates a filtering device for filtering a fluid having solid particles in suspension. In particular, the fluid having solid particles in suspension is called turbid. After filtration, the fluid is called filtrate and the removed solid particles are called retentate.

The filtering device 1 comprises a body 2 defining a filtering chamber 3. The body 2 has an inlet 2a for the fluid to be filtered, an outlet 2b for the filtered fluid and a drain 2c for the solid particles removed from the fluid.

The filtering device 1 comprises at least one wall 4 on which a plurality of openings 5 are obtained. Preferably, the openings 5 are through holes. The diameter of the holes is made as a function of the application of the filtering device 1 and the expected size of the solid particles to be retained. That is, the wall 4 is a perforated panel or a grille.

Preferably, the holes are made by laser technology. Alternatively, the holes are made by a countersunk tool. The latter if particularly viscous fluids must be treated which must significantly decrease their speed at the outlet of the wall, taking advantage of the greater diameter of the outlet itself.

The wall 4 is arranged inside the filtering chamber 3. The wall 4 is arranged transversely to the fluid flow passing from the inlet 2a to the outlet 2b. Thereby, when the fluid passes through the openings 5 of the wall 4, the solid particles larger than the openings 5 are retained on the wall 4, obtaining the desired filtration.

Preferably, the wall 4 is made in a single piece with the body 2 of the filtering device 1. Preferably, the wall 4 is arranged perimetrally in the filtering chamber 3. Preferably, the wall 4 delimits the filtering chamber 3. Preferably, the wall 4 is arranged near the outlet 2b. Preferably, the wall 4 is arranged at the outlet 2b. In particular, the wall 4 delimits the filtering chamber 3 at the outlet 2b, partially occluding it (since the openings 5 are present).

In the embodiment described and illustrated herein, the filtering wall 4 is obtained in the body 2 so as to be an integral part thereof. The only physical delimitation which distinguishes the wall 4 from the rest of the body 2 is the presence of the openings 5.

The filtering device 1 comprises a removal means 6 for removing the solid particles, operatively active on the wall 4 to remove the retained solid particles and convey them towards the drain 2c.

Preferably, the removal means 6 comprises a scraper element 7 and movement means 8 of the scraper element 7 with respect to the wall 4.

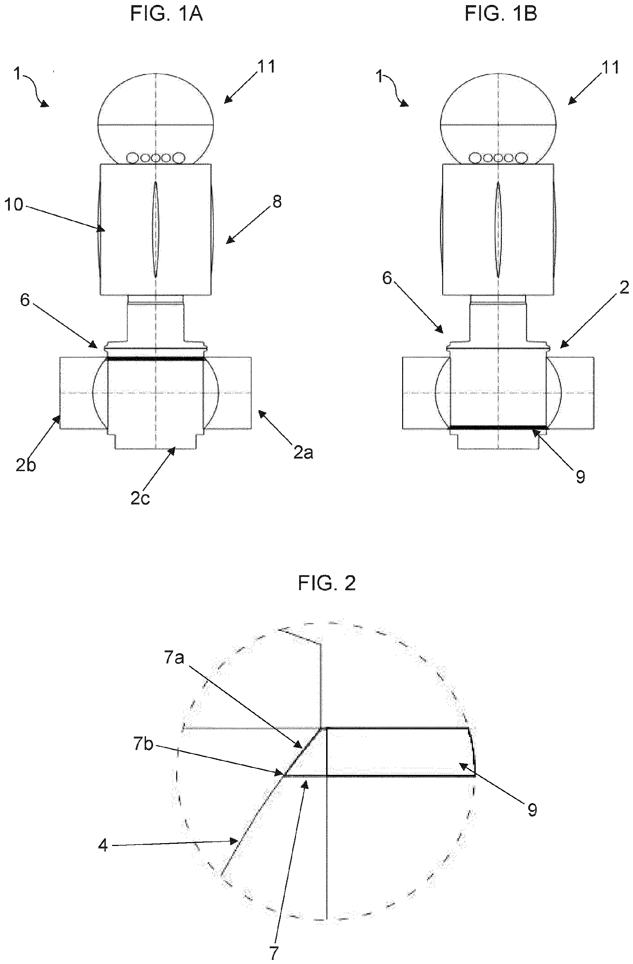

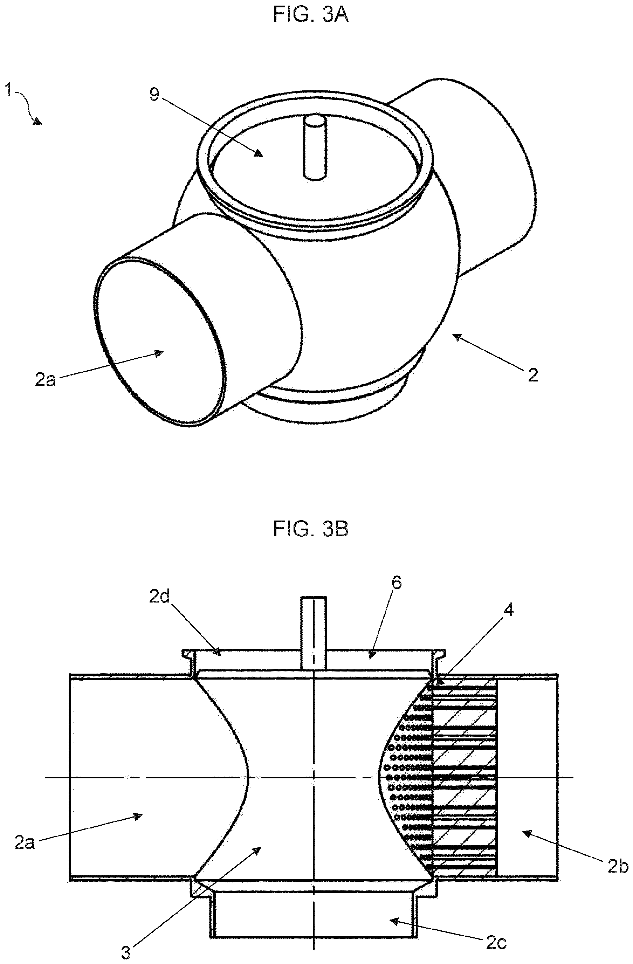

In the preferred embodiment, illustrated in figures 1A-5B, the movement means 8 is operatively active on the scraper element 7 to move it along the wall 4 between a first and a second position, and vice versa. The first position is located at a first distance from the drain 2c, the second position is located at a second distance from the drain 2c. The second distance is less than the first. That is, the scraper element 7 removes the solid particles, pushing them towards the drain 2c.

Preferably, the first and the second position are located on opposite sides of the wall 4.

Preferably, the second position is located near the drain 2c.

Preferably, the movement means 8 is active on the scraper element 7 to slide it between the first and the second position.

In the embodiment described and illustrated herein, the movement means 8 comprises a support 9 which is slidable between the first and the second position. The scraper element 7 is a cutting portion arranged perimetrally around at least one portion of the support 9. Cutting portion is intended herein as a pointed portion.

Observing a cross section, the scraper element 7 is a substantially triangular or trapezoidal portion which protrudes from the support 9. That is, the scraper element 7 has an inclined surface 7a away from the support 9.

Preferably, the scraper element 7 comprises a cutting edge 7b acting on the wall 4.

Preferably, the support 9 is a disc.

In the embodiment described and illustrated herein, the wall 4 is curved. In particular, the wall 4 is concave. The concavity of the wall 4 faces towards the inside of the filtering chamber 3. Thereby, the scraper element 7 arranged circularly around the disc 9 maintains contact with the wall 4 throughout its stroke between the first and the second position, ensuring an optimal scraping.

Preferably, the movement means 8 comprises a pneumatic actuator 10 acting on the scraper element 7 to move it between the two positions. In particular, the pneumatic actuator 10 acts on the support 9.

Preferably, the pneumatic actuator 10 is of the single-acting type. Alternatively, any known linear actuation device can be used instead of the pneumatic actuator 10.

In accordance with an embodiment, the scraper element 7 has a substantially 360° extension around the support 9. In this case, the movement means 8 imparts a roto-translational motion to the scraper element 7. Thereby, the portion of the scraper element 7 active on the wall 4 changes continuously during the stroke between the two positions, reducing wear.

Preferably, the movement means 8 comprises an electric motor which imposes the roto-translational motion with a push crank mechanism. Preferably, the rotation and the translation occur at least with respect to parallel axes. Preferably, the rotation and the translation occur with respect to the same axis.

In particular, the translation occurs according to an approaching/distancing direction to/from the drain 2c.

Preferably, the scraper element 7 is applied around the support 9. In this case, the scraper element 7 is preferably made of a harder material with respect to that of the support 9. In particular, the scraper element 7 is made of a coated hard metal. By way of non-limiting example, the hard metal is a powdered metallurgical material, consisting essentially of tungsten carbide particles and a metallic cobalt-rich binder, consisting of more than 80% of a tungsten carbide hard phase; the coating is in PVD, obtained at temperatures of about 400-600 C°. The process is based on the evaporation of a metal which reacts, for example, with nitrogen to form a hard nitride coating on the surface of the tool.

Alternatively, the scraper element 7 is made of Cermet, a metal in which the hard particles are based on titanium carbide. Compared to hard metal, Cermet has a higher resistance to wear and a lower tendency to bond; Cermets can also have a PVD coating to increase their resistance to wear. Alternatively, the scraper element 7 and the support 9 are made in a single piece.

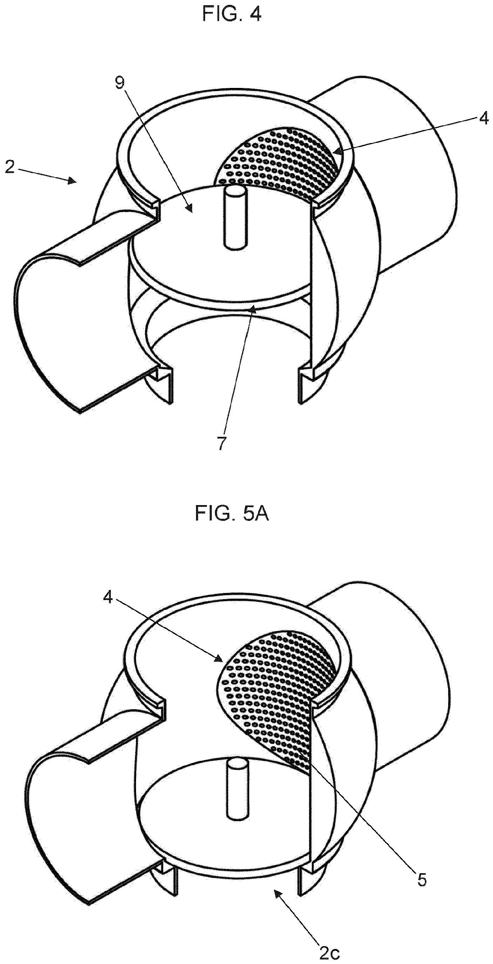

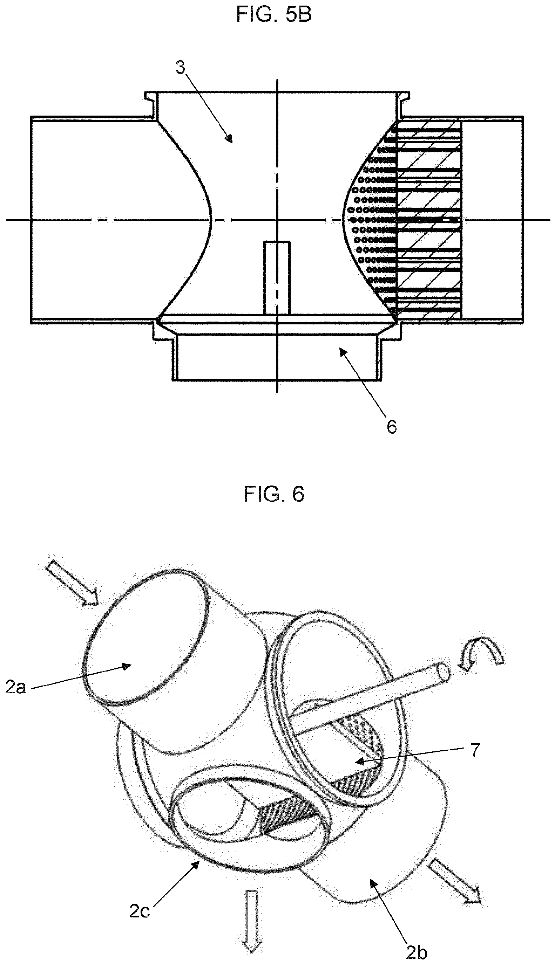

In accordance with another embodiment, illustrated in figure 5, the movement means 8 is operatively active on the scraper element 7 to rotate it with respect to the wall 4.

In accordance with a further embodiment (not illustrated), the removal means 6 comprises at least one dispensing nozzle for dispensing compressed air. The nozzle is positioned so as to dispense compressed air through the wall 4 towards the inlet 2a. Thus, the compressed air passes through the wall 4 in counter-current and removes the retained solid particles.

Alternatively, the nozzle is positioned on an opposite side of the wall 4 with respect to the drain 2c. The nozzle dispenses compressed air which laps the wall 4, removes the solid particles and accompanies them towards the drain 2c.

In an alternative embodiment, the filtering device 1 comprises two walls 4 which are arranged inside the filtering chamber 3. In this case, the solid particle removal means 6 can comprise two devices, each operatively active on a single wall, or a single device operatively active on both walls. For example, a scraper element 7 as described above slides (or roto-translates) acting simultaneously on the two walls 4. The scraper element 7 is thus interposed between the two walls 4 during operation.

In the embodiment described and illustrated herein, the body 2 of the filtering device 1 has a substantially T-shaped structure, where the two opposing lines represent the inlet and outlet of the filter, and the lower path is the drain. In other words, a straight conduit connects the inlet 2a with the outlet 2b, while the drain 2c is made along the straight conduit. Preferably, the wall 4 is located at the outlet 2b and is shaped to close the outlet 2b.

In particular, the body 2 has a spherical structure with two aligned cylindrical projections defining the inlet 2a and the outlet 2b. The drain 2c and a housing mouth 2d of the support 9 are obtained on the spherical structure. The housing mouth 2d defines a rest position (which coincides with the first position) of the scraper element 7.

Preferably, the pneumatic actuator 10 is mounted on the opposite side with respect to the drain 2c. The pneumatic actuator 10 is connected to a shaft at the end of which the support 9 is mounted, which thus has a stroke between the first and the second position.

A cap 11 is arranged at the opposite end of the pneumatic actuator 10 which contains the electrical accessories, such as inductive limit switches for on-off signalling and an actuation solenoid valve.

A distribution line of a fluid having solid particles in suspension, according to the present invention, is described below.

The distribution line 100 comprises at least one filtering device 1 according to what has been described above.

The distribution line 100 comprises a first shut-off valve 101. The first shut-off valve 101 is arranged upstream of the inlet 2a of the filtering device 1. The distribution line 100 comprises a second shut-off valve 102. The second shut-off valve 102 is arranged downstream of the drain 2c of the filtering device 1.

The first and the second shut-off valve 101, 102 are preferably knife gate valves.

The distribution line 100 is configurable in a first and a second condition.

The first condition represents full operation. In the first condition, the first shut-off valve 101 is open, the second shut-off valve 102 is closed, and fluid passes through the filtering device 1 from the inlet 2a to the outlet 2b. In this crossing, the fluid is filtered and the solid particles are retained on the wall 4 of the filtering device 1.

The second condition represents a cleaning condition of the filtering device 1. In the second condition, the first shut-off valve 101 is closed, interrupting the fluid flow through the filtering device 1, the second shut-off valve 102 is open and the removal means 6 acts on the wall 4 to remove the solid particles retained thereby and convey them to the drain 2c. Once the action of the removal means 6 is finished, the first shut-off valve 101 opens, the second shut-off valve 102 closes and the distribution line 1 returns to its full operation.

The distribution line is fed by an electric pump. The cleaning condition of the filtering device defines a filter non-operating time interval. The fluid flow in this time interval can be managed in various manners. By way of example, three possibilities are reported:
- a mechanical relief valve, located downstream of the line feed pump, returns the flow rate relative to the non-operating period to the pump feed tank, or recirculates the flow rate on the same pump;
- upstream of the filtering device, an accumulation tank (hydraulic damper) of capacity commensurate with the flow rate of the pump can be included, referring to the non-operating time of the filter;
- the pump is managed by an inverter, which adjusts the electrical frequency to minimum values, so as to neglect the time inertia.
The features of the filtering device for filtering a fluid having solid particles in suspension and a distribution line for distributing such a fluid, according to the present invention, are clear from the description, as are the advantages.

In particular, the filtration by means of a perforated wall or grille allows a simple structure of the filtering device, while envisaging the removal means of the solid particles from the wall still allows to make the filter self-cleaning.

Furthermore, the fact that the removal occurs mechanically allows to reduce the consumption of cleaning water used with respect to the known solutions. In particular, no amount of cleaning water is required for the proposed filtering device.

## Claims

1. A filtering device (1) for filtering a fluid having solid particles in suspension, comprising:
a body (2) defining a filtering chamber (3) and having an inlet (2a) for the fluid to be filtered, an outlet (2b) for the filtered fluid and a drain (2c) for the solid particles removed from the fluid;
a wall (4) on which a plurality of openings (5) are obtained, said wall (4) being arranged inside the filtering chamber (3) and transversely to the fluid flow passing from the inlet (2a) to the outlet (2b) so that, when the fluid passes through the openings (5) of the wall (4), the solid particles larger than the openings (5) are retained on the wall (4);
a removal means (6) for removing the solid particles, operatively active on the wall (4) to remove the retained solid particles and convey them towards the drain (2c).

2. The filtering device (1) according to claim 1, wherein the wall (4) is made in a single piece with the body (2) so as to be an integral part thereof.

3. The filtering device (1) according to claim 1 or 2, wherein the wall (4) is curved and is arranged near the outlet (2b) so as to delimit the filtering chamber (3).

4. The filtering device (1) according to any one of claims 1 to 3, wherein said removal means (6) comprises a scraper element (7) and movement means (8) operatively active on the scraper element (7) to move it along the wall (4) between a first position, in which it is located at a first distance from the drain (2c), and a second position, in which it is located at a second distance from the drain (2c) which is lower than the first, and vice versa.

5. The filtering device (1) according to claim 4, wherein said movement means (8) comprises a support (9) which is movable between the first and the second position, said scraper element (7) being a cutting portion arranged perimetrally around at least one portion of the support (9).

6. The filtering device (1) according to claim 4 or 5, wherein said movement means (8) is operatively active on the scraper element (7) to move it between the two positions along a substantially straight trajectory.

7. The filtering device (1) according to claim 4 or 5, wherein said movement means (7) is operatively active on the scraper element (7) to move it between the two positions according to a roto-translational motion.

8. The filtering device (1) according to any one of claims 1 to 3, wherein said removal means (6) comprises a scraper element (7) and movement means (8) operatively active on the scraper element (7) to rotate it with respect to the wall (4).

9. The filtering device (1) according to any one of the preceding claims, wherein said removal means (6) comprises a dispensing nozzle for dispensing compressed air through the wall (4) towards the inlet (2a).

10. A distribution line (100) for distributing a fluid having solid particles in suspension, comprising:
a filtering device (1) according to any one of the preceding claims;
a first shut-off valve (101) arranged upstream of the inlet (2a) of the filtering device (1);
a second shut-off valve (102) arranged downstream of the drain (2c) of the filtering device (1),
said distribution line (100) being configurable in a first condition, in which the first shut-off valve (101) is open, the second shut-off valve (102) is closed and the fluid flow is filtered by passing through the filtering device (1), and in a second condition, in which the first shut-off valve (101) is closed, interrupting the fluid flow through the filtering device (1), the second shut-off valve (102) is open and the removal means (6) acts on the wall (4) to remove the solid particles retained thereby and convey them to the drain (2c).
